# EUROPEAN PATENT APPLICATION

(11) **EP 1 615 458 A1**
(43) Date of publication of application: **11.01.2006**
(21) Application number: 04727376.8
(22) Date of filing: 14.04.2004
(51) Int. Cl.: H04Q 7/38

(54) **MOBILE COMMUNICATION SYSTEM, RADIO BASE STATION CONTAINING CONTROL DEVICE IN THE MOBILE COMMUNICATION SYSTEM AND CONTROL METHOD THEREOF**

(30) Priority: 14.04.2003 JP 2003108570
(71) Applicant: NEC CORPORATION, Minato-ku, Tokyo 108-8001 (JP)
(72) Inventor: SAKATA, Masayuki C/o Nec Corporation, Tokyo 1088001 (JP)
(74) Representative: Vossius & Partner
(86) International application number: PCT/JP2004/005288
(87) International publication number: WO 2004/093481

(57) **Abstract**

A mobile communication system includes: a mobile terminal unit (UE); a radio base station (Node B) for performing communication with the mobile terminal unit via radio line; a radio controller (RNC) controlling the radio base station and physically divided to first control means (CPE) for performing signaling transfer control and second control means (UPE) for accommodating a radio base station thereunder and performing user data transfer control; and a radio base station replacement control apparatus (51) for governing control of replacement of the radio base station. Since the radio base station replacement control apparatus (51) is separately arranged in a network (RAN), a specific CPE or a terminal resource control section need not have the control function of replacement of the radio base station, and accordingly control of the replacement of the radio base station can be concentratedly performed by this radio base station replacement control apparatus.

## Description

### Technical Field:

The present invention relates to a mobile communication system and a radio base station replacement control apparatus and control method and, more particularly, to a W-CDMA cellular type mobile communication system and a radio base station replacement control apparatus and control method.

### Background Art:

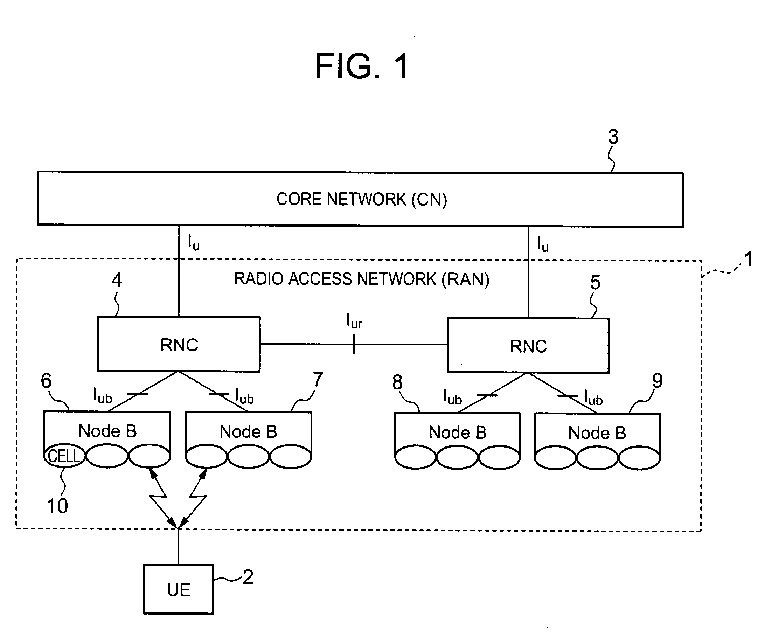

Fig. 1 shows the existing architecture of a W-CDMA communication system as a mobile communication system. A radio access network (RAN) 1 includes radio controllers (RNCs) 4 and 5 and Node Bs 6 to 9, and is connected to a core network (CN) 3 as an exchange network via an Iu interface. The Node Bs 6 to 9 mean logical nodes which perform radio transmission and reception, and more specifically are radio base station apparatuses.

The interface between the Node B and the RNC is called Iub, and an Iur interface is also defined as the interface between the RNCs. Each Node B covers one or a plurality of cells 10, and is connected to a mobile terminal unit (UE) 2 via a radio interface. The Node B terminates a radio channel, and the RNC manages the Node Bs and selects and synthesizes a radio path upon soft handover. Note that details of the architecture shown in Fig. 1 are defined by 3GPP (3rd Generation Partnership Projects), and disclosed in non-patent reference 1.

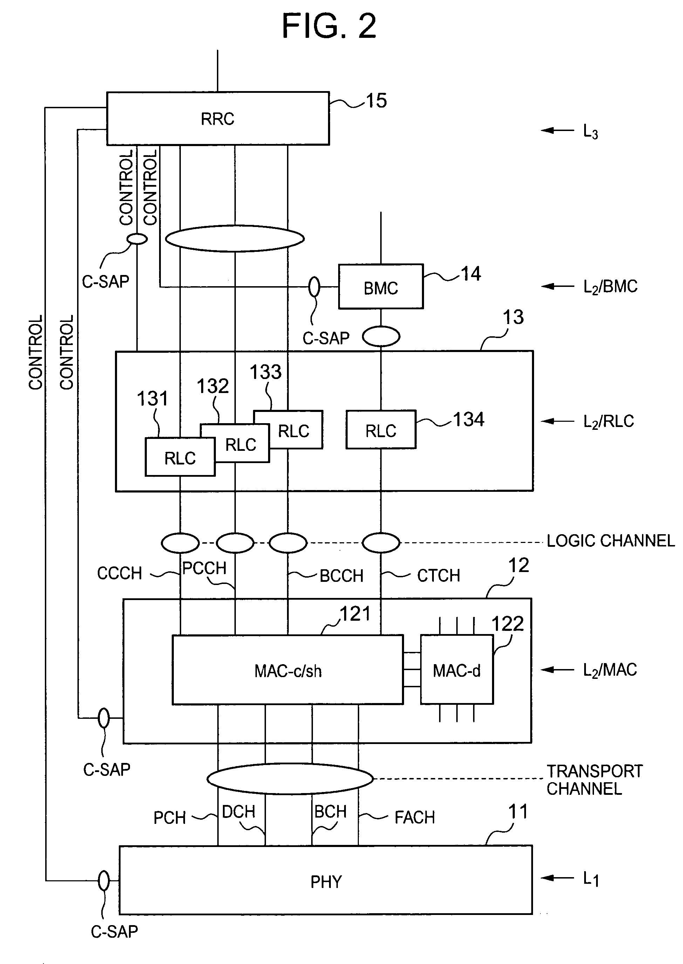

Fig. 2 shows the protocol architecture of the radio interface in this W-CDMA communication system shown in Fig. 1. As shown in Fig. 2, this protocol architecture includes three protocol layers, i.e., a physical layer (PHY) 11 indicated by L1, data link layers 12 to 14 indicated by L2, and a network layer (RRC: Radio Resource Control) 15 indicated by L3 ("W-CDMA Mobile Communication System", edited by Keiji Tatekawa, published in 2001 by Maruzen, pp. 96 and 97).

Data link layer L2 is divided into three sublayers, i.e., a MAC (Media Access Control) layer 12, RLC (Radio Link Control) layer 13, and BMC (Broadcast/Multicast Control) layer 14. The MAC layer 12 has MAC-c/sh (common/share) 121 and MAC-d (dedicated) 122, and the RLC layer 13 has a plurality of RLCs 131 to 134.

Each ellipse shown in Fig. 2 indicates a service access point (SAP) between layers or sublayers, and the SAP between the RLC sublayer 13 and MAC sublayer 12 provides a logic channel. That is, this logic channel is provided from the MAC sublayer 12 to the RLC sublayer 13, classified by the functions or logical characteristics of transmission signals, and characterized by the contents of information to be transferred. Examples of the logic channel are CCCH (Common Control Channel), PCCH (Paging Control Channel), BCCH (Broadcast Control Channel), and CTCH (Common Traffic Channel).

The SAP between the MAC sublayer 12 and physical layer 11 provides a transport channel. That is, this transport channel is provided from the physical layer 11 to the MAC sublayer 12, classified by transmission forms, and characterized by the type of information and the way the information is transferred via the radio interface. Examples of the transport channel are PCH (Paging Channel), DCH (Dedicated Channel), BCH (Broadcast Channel), and FACH (Forward Access Channel).

The physical layer 11 and the sublayers 12 to 14 of the data link layer are controlled by the network layer (RRC) 15 via C-SAPs which provide control channels. Details of this protocol architecture shown in Fig. 2 are defined in TR25. 925 of 3GPP.

In addition, although not particularly shown in Fig. 2, a C (Control) plane for signaling which transfers control signals and a U (User) plane which transfers user data exist, and the BMC sublayer 14 of L2 is applied only to the U plane.

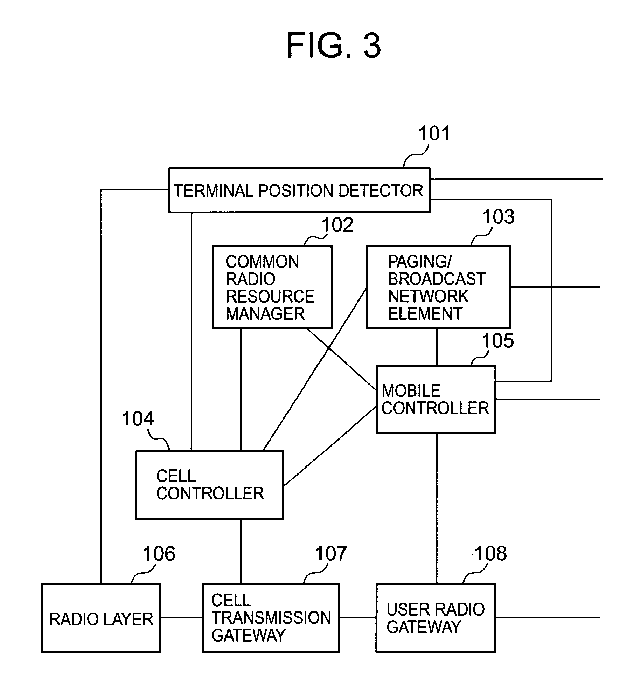

Fig. 3 is a block diagram showing an example of an open RAN architecture made up of the RNCs 5 and 6 and Node Bs 6 to 8 shown in Fig. 1. As shown in Fig. 3, this example comprises a terminal position detector 101 which collects and calculates the positions of terminals, a common radio resource manager 102 which manages the radio access network environment and optimizes the network load, a paging/broadcast network element 103 which controls the flows of radio broadcast/multicast and notifies the states of radio broadcast/multicast, a cell controller 104 which controls permission, congestion, and allocation of radio access to each radio base station apparatus, a mobile controller 105 which establishes and releases a transmission channel, a cell transmission gateway 107 which transmits individual radio channel signals and perform multiplexing/separation of a common radio channel signal, a user radio gateway 108 which encrypts and decrypts a radio channel and controls compression, multiplexing/separation, and retransmission of a header, and a radio layer 106 which generates position information of a terminal, encodes and decodes a radio channel, or controls the electric power of a radio channel.

In this arrangement, the cell controller 104 controls radio access to each radio base station apparatus, so control signals for controlling radio access are exchanged between the cell controller 104, cell transmission gateway 107, and radio layer 106 (e.g., Mobile Wireless Internet Forum (MWIF) "Open RAN Architecture in 3rd Generation Mobile Systems Technical Report MTR-007" v1.0.0 (12 June 2001)).

In the RNCs 4 and 5 of the radio access network (RAN) 1 as described above, a function of controlling the C plane and a function of controlling the U plane are physically integrated. In this mobile communication system having the RNC in which these two control functions of the U plane and C plane are integrated, when the signaling throughput is to be increased, an RNC itself must be added although it is only necessary to add the C plane control function, and, when the user data transfer rate is to be increased, an RNC itself must be added although it is only necessary to add the U plane control function. Accordingly, it is difficult for the conventional RNC configuration to construct a system having high scalability.

Also, the following problem arises upon soft handover. That is, when a normal call is set, one radio channel (radio link) is connected between the RNC and Node B. However, when the UE (mobile terminal unit) moves to cause soft handover, two or more paths are connected between the RNC and a plurality of Node Bs. If soft handover occurs across the RNCs, a path is connected by using the interface called Iur (Fig. 1) between a serving RNC and drift RNC.

If soft handover thus occurs across the RNCs, although a user data path can be connected from one U plane control functional unit to a plurality of Node Bs in the soft handover state, a path for this purpose must be connected between a serving RNC and drift RNC. This not only wastes the resources, but also produces a delay because data is transferred via the RNC. Therefore, a technique which separates the U plane control function and C plane control function is possible. When the U plane control function and C plane control function are to be separated in the system shown in Fig. 3, the C plane control function can be formed by the terminal position detector 101, common radio resource manager 102,
paging/broadcast network element 103, cell controller 104, and mobile controller 105, and the U plane control function can be formed by the radio layer 106, cell transmission gateway 106, and user radio gateway 107.

In the arrangement shown in Fig. 3, however, the cell controller controls radio access to each radio base station apparatus, thereby exchanging control signals for controlling radio access between the cell controller, cell transmission gateway, and radio layer. Therefore, if the C plane control function is formed by the terminal position detector, common radio resource manager, paging/broadcast network element, cell controller, and mobile controller and the U plane control function is formed by the radio layer, cell transmission gateway, and user radio gateway, large amounts of signals for controlling radio access are exchanged between the portions implementing the C plane control function and the portions implementing the U plane control function, and this complicates the control.

Also, when this configuration is applied to mobile communication systems having different radio schemes, the portions implementing the C plane control function and the portions implementing the U plane control function must be formed in accordance with the number of the radio schemes. This increases the scale and cost.

Furthermore, when a system having high scalability can be constructed by separating the C plane control function and U plane control function, for example, if a certain U plane control functional unit has failed or is overloaded, the accommodation of cells of a Node B under its control can be replaced to another U plane control functional unit. In this case, a certain specific one of a plurality C plane control functional units must representatively control this Node B cell replacement. Accordingly, this specific C plane control functional unit alone must be given the Node B cell replacement control function. This makes it impossible to form a configuration in which all C plane control functional units have the same function.

### Disclosure of Invention:

The present invention has been made in consideration of the various problems of the background art, and has as its object to provide a mobile communication system and a radio base station replacement control apparatus and control method which can construct a system having high scalability, waste no resources, and produce no delay.

It is another object of the present invention to provide a mobile communication system and a radio base station replacement control apparatus and control method which can construct a system having high scalability, reduce the complexity of signal exchange control between apparatuses, and do not increase the scale more than necessary even when radio schemes are different.

It is still another object of the present invention to provide a mobile communication system and a radio base station replacement control apparatus and control method by which when a C plane control function and U plane control function are separated, all C plane control functional units can have the same arrangement.

In order to achieve the above object, according to a first aspect of the present invention, there is provided a mobile communication system comprising a mobile terminal unit, a radio base station which communicates with said mobile terminal unit via a radio channel, and a radio controller which controls said radio base station, and is physically separated into first control means for controlling transfer of signaling and second control means for accommodating said radio base station under the control and controlling transfer of user data, characterized by further comprising a radio base station replacement control apparatus which controls replacement of said radio base station.

According to a second aspect of the present invention, there is provided a mobile communication system comprising a mobile terminal unit, a radio base station which communicates with said mobile terminal unit via a radio channel, and a radio controller which controls said radio base station, and is physically separated into first control means for performing control independent of a radio transmission scheme and second control means for accommodating said radio base station under the control and performing control depending on a radio transmission scheme,
characterized by further comprising a radio base station replacement control apparatus which controls replacement of said radio base station.

According to a third aspect of the present invention, there is provided a mobile communication system comprising a mobile terminal unit, a radio base station which communicates with said mobile terminal unit via a radio channel, and a radio controller which controls said radio base station, and is physically separated into first control means for controlling transfer of signaling and second control means for accommodating said radio base station under the control and controlling transfer of user data, said second control means performing control depending on a radio transmission scheme, characterized by further comprising a radio base station replacement control apparatus which controls replacement of said radio base station.

According to a fourth aspect of the present invention, there is provided a mobile communication system comprising a mobile terminal unit, a radio base station which communicates with said mobile terminal unit via a radio channel, and a radio controller which controls said radio base station, and is physically separated into first control means for controlling a terminal resource of said mobile terminal unit and second control means for accommodating said radio base station under the control and controlling a base station resource of said radio base station, characterized by further comprising a radio base station replacement control apparatus which controls replacement of said radio base station.

According to a fifth aspect of the present invention, there is provided a mobile communication system as set forth in any one of the first to fourth aspects, characterized by further comprising a network which connects said first control means, second control means, and radio base station replacement control apparatus.

According to a sixth aspect of the present invention, there is provided a mobile communication system as set forth in any one of the first to fifth aspects, characterized in that said radio base station replacement control apparatus comprises means for notifying, in response to an external trigger, a radio base station as an object of replacement of identification information of second control means which is to newly accommodate said radio base station.

According to a second aspect of the present invention, there is provided a mobile communication system as set forth in the sixth aspect, characterized in that said radio base station replacement control apparatus further comprises means for notifying said first control means of identification information of said radio base station as an object of replacement and identification information of said second control means as an accommodation destination.

According to a eighth aspect of the present invention, there is provided a radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling transfer of signaling and second control means for accommodating said radio base station under the control and controlling transfer of user data, characterized in that said first and second control means are physically independent of each other.

According to a ninth aspect of the present invention, there is provided a radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for performing control independent of a radio transmission scheme and second control means for accommodating said radio base station under the control and performing control depending on a radio transmission scheme, characterized in that said first and second control means are physically independent of each other.

According to a tenth aspect of the present invention, there is provided a radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling transfer of signaling and second control means for accommodating said radio base station under the control and controlling transfer of user data, said second control means performing control depending on a radio transmission scheme, characterized in that said first and second control means are physically independent of each other.

According to a 11th aspect of the present invention, there is provided a radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling a terminal resource of said mobile terminal unit and second control means for accommodating said radio base station under the control and controlling a base station resource of said radio base station, characterized in that said first and second control means are physically independent of each other.

According to an 12^{th} aspect of the present invention, there is provided a radio base station replacement control apparatus as set forth in any one of the eighth to 11^{th} aspects, characterized in that said first and second control means are connected across a network.

According to a 13^{th} aspect of the present invention, there is provided a radio base station replacement control apparatus as set forth in any one of the eighth to 12^{th} aspects, characterized by further comprising means for notifying, in response to an external trigger, a radio base station as an object of replacement of identification information of second control means which is to newly accommodate said radio base station. According to a 14^{th} aspect of the present invention, there is provided a radio base station replacement control apparatus as set forth in the 13^{th} aspect, characterized by further comprising means for notifying said first control means of identification information of said radio base station as an object of replacement and identification information of said second control means as an accommodation destination.

According to a 15^{th} aspect of the present invention, there is provided a radio base station replacement control method in a communication system comprising a mobile terminal unit, a radio base station which communicates with the mobile terminal unit via a radio channel, a radio controller which controls the radio base station, and is physically separated into first control means for controlling transfer of signaling and second control means for accommodating the radio base station under the control and controlling transfer of user data, and a radio base station replacement control apparatus which is provided physically independently of the first and second control means and controls replacement of the radio base station, characterized by comprising the step of notifying, in response to an external trigger, a radio base station as an object of replacement of identification information of second control means which is to newly accommodate the radio base station.

According to a 16^{th} aspect of the present invention, there is provided a radio base station replacement control method as set forth in the 15^{th} aspect, characterized by further comprising the step of notifying the first control means of identification information of the radio base station as an object of replacement and identification information of the second control means as an accommodation destination.

According to a 17^{th} aspect of the present invention, there is provided a program for causing a computer to execute a radio base station replacement control method in a communication system comprising a mobile terminal unit, a radio base station which communicates with the mobile terminal unit via a radio channel, a radio controller which controls the radio base station, and is physically separated into first control means for controlling transfer of signaling and second control means for accommodating the radio base station under the control and controlling transfer of user data, and a radio base station replacement control apparatus which is provided physically independently of the first and second control means and controls replacement of the radio base station, characterized by comprising the step of notifying, in response to an external trigger, a radio base station as an object of accommodation of identification information of second control means which is to newly accommodate the radio base station.

According to an 18^{th} aspect of the present invention, there is provided a program as set forth in the 17^{th} aspect, characterized by further comprising the step of notifying the first control means of identification information of the radio base station as an object of replacement and identification information of the second control means as an accommodation destination.

In the present invention as described above, a monitor controller is additionally placed in the network. Therefore, even in a system configuration in which a plurality of CPEs or a plurality of terminal resource control units are arranged in the network, the monitor controller can concentrically control the change of cell setting (the rearrangement of Node Bs). This makes it unnecessary to give any specific CPE or terminal resource control unit the function of controlling the change of cell setting (the rearrangement of Node Bs), and achieves the effect of giving the same arrangement to all CPEs or terminal resource control units. This is advantageous in respect of both manufacture and cost.

The above and many other objects, aspects, and advantages of the present invention will be apparent to those skilled in the art from the following description and the accompanying drawings in which several preferred embodiments matching the principle of the present invention are presented as the best mode for carrying out the invention.

### Brief Description of Drawings:

Fig. 1 is a view showing the existing system architecture using a W-CDMA communication method;
Fig. 2 is a view showing the system architecture shown in Fig. 1 as a protocol architecture;
Fig. 3 is a view showing the system architecture shown in Fig. 1 as an open architecture;
Fig. 4 is a block diagram showing an example of the protocol architecture of an RNC as the basis of an embodiment of the present invention;
Fig. 5 is a network diagram for explaining the ease of Node B replacement by the arrangement shown in Fig. 4;
Fig. 6 is a view for explaining the state of soft handover when the arrangement shown in Fig. 4 is used;
Fig. 7 is a path connection sequence diagram when soft handover occurs in the arrangement shown in Fig. 6;
Fig. 8 is a view showing the network configuration of an IP network when the arrangement shown in Fig. 4 is used;
Fig. 9 is a sequence diagram when radio links are to be simultaneously set for a plurality of Node Bs when the arrangement shown in Fig. 4 is used;
Fig. 10 is a sequence diagram when a radio link is to be additionally set for a new Node B when the arrangement shown in Fig. 4 is used;
Fig. 11 is a block diagram showing an example of an open RAN architecture as the basis of another embodiment of the present invention;
Fig. 12 is a network diagram for explaining the ease of Node B replacement by the arrangement shown in Fig. 11;
Fig. 13 is a path connection sequence diagram when soft handover occurs in the arrangement shown in Fig. 12;
Fig. 14 is a view showing the arrangement of Fig. 4 in accordance with an open RAN architecture;
Fig. 15 is a view for explaining the problem of Node B replacement in the network shown in Fig. 5;
Fig. 16 is a view showing the network configuration of an embodiment of the present invention;
Fig. 17 is a sequence diagram showing the operation of the embodiment of the present invention;
Fig. 18 is a functional block diagram of a monitor controller;
Fig. 19 is a flowchart showing an example of the operation of the monitor controller;
Fig. 20 is a view showing an example of the contents of a database;
Fig. 21 is a flowchart showing the operation of a Node B;
Fig. 22 is a flowchart showing the operation of a CPE;
Fig. 23 is a view showing the network configuration of another embodiment of the present invention;
Fig. 24 is a sequence diagram showing the operation of the other embodiment of the present invention;
Fig. 25 is a flowchart showing another example of the operation of the monitor controller;
Fig. 26 is a view showing another example of the contents of the database;
Fig. 27 is a flowchart showing the operation of a base station resource control unit; and
Fig. 28 is a flowchart showing the operation of a terminal resource control unit.

### Best Mode for Carrying Out the Invention:

Several preferred embodiments of the present invention will be described in detail below with reference to the accompanying drawings.

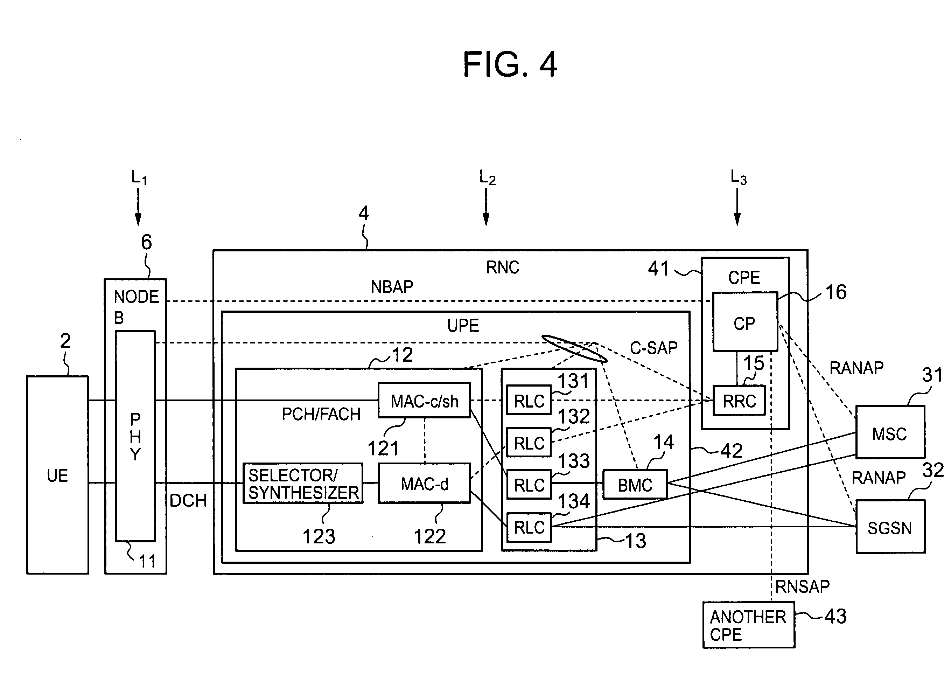

First, Fig. 4 is a functional block diagram as a premise of the present invention, in which the same reference numerals as in Fig. 2 denote the same parts. As shown in Fig. 4, an RNC 4 is separated into a C plane controller (CPE: Control Plane Equipment) 41 which corresponds to a C plane for controlling signaling, and a U plane controller (UPE: User Plane Equipment) 42 which corresponds to a U plane for controlling user data.

All signaling operations are directly performed between devices and a central controller (CP: Control Processor) 16 installed in the C plane controller 41. However, RRC signaling between a mobile terminal unit (UE) 2 and the RNC 4 is transferred to an RRC 15 in the C plane controller 41 after an RLC 131 or 132 is terminated in the U plane controller 42, since the C plane and U plane cannot be clearly separated.

With this arrangement, in the existing RNC protocol layer architecture shown in Fig. 2, a physical layer (PHY) 11 indicated by L1 can be separated into a Node B (radio base station) 6, data link layers 12 to 14 indicated by L2 can be separated into the U plane controller 42, and a network layer 15 indicated by L3 and its upper layers can be separated into the C plane controller 41.

The RRC 15 in the C plane controller 41 controls individual devices which terminate the physical layer 11 in the Node B, and the MAC layer 12, RLC layer 13, and BMC layer 14 in the U plane controller 42, by using C-SAPs (Control Service Access Points) which provide control channels. Also, the CP 16 in the C plane controller 41 directly terminates and processes a signaling NBAP between the Node B 6 and RNC 4, a signaling RNSAP between the RNC 4 and a C plane controller (CPE) 43 in another RNC, and a signaling RANAP between the RNC 4 and an MSC (Mobile Switching Center) 31 or an SGSN (Serving GPRS (Global Packet Radio Service) Switching Node) 32.

Note that the MSC 31 has a channel switching function, the SGSN 32 has a packet switching function, and both of which are included in a core network (CN) 3 shown in Fig. 1.

Also, RRC signaling used between the RNC 4 and mobile terminal unit 2 is terminated by the RRC layer 15 in the C plane controller 41 via the mobile terminal unit 2, the Node B 6, and the MAC layer 12 and RLC layer 13 in the U plane controller 42. PCH/FACH is terminated by a MAC-c/sh layer 121 and the RLC layer 13 in the U plane controller 42 and transmitted to the C plane controller 41, since the relationship between the Node B 6 and U plane controller 42 is always fixed after the Logical O & M protocol (which is physically signaling by which the RN controls the resources installed in the Node B, and is defined in the specification (25. 401) of 3GPP), and is not changed unless station data is changed.

A DCH (Dedicated Channel) for transmitting user data can connect an arbitrary Node B and the U plane controller 42. After path selection and synthesis are performed between a plurality of Node Bs by a selector/synthesizer 123 in the U plane controller 42, the DCH is terminated by a MAC-d layer 122 and the RLC layer 13, and transmitted to the MSC 31 having a channel switching function or the SGSN 32 having a packet switching function via the C plane controller 41. Note that when soft handover occurs, the selector/synthesizer 123 selects and synthesizes DCHs from a plurality of Node Bs, selects a channel having the highest quality (reception quality) from these Node Bs, and sends the selected channel to the host apparatus.

By the use of the apparatus configuration shown in Fig. 4 as described above, a system configuration having high scalability can be assembled. That is, to increase the signaling throughput, the C plane controller 41 alone can be added, and, to increase the user data transfer rate, the user plane controller 42 alone can be added. Also, the individual devices in the U plane controller 42 have no relationship with each other and are controlled by the RRC 15 in the C plane controller 41. Therefore, these devices may also be installed as independent devices.

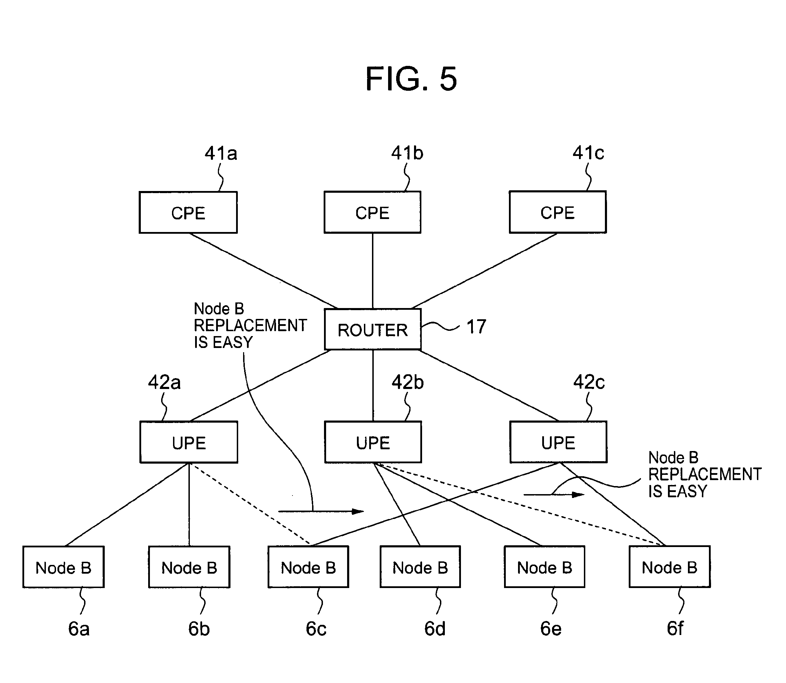

Fig. 5 is a view for explaining that the scalability can be ensured between the C plane controller (CPE) 41 and U plane controller (UPE) 42 separated on the basis of the principle shown in Fig. 4. C plane controllers 41a to 41c and U plane controllers 42a to 42c are connected via a device 17 such as an IP router or hub. Conventionally, a C plane controller and U plane controller are integrated into a single RNC device, so they can be added only in the form of an RNC. However, a C plane controller performs a signaling process such as a calling process, so the throughput may become insufficient if the amount of calls increases. In this case, the processing can be easily dispersed by adding a new C plane controller.

For example, an algorithm which determines that when there are two C plane controllers 41a and 41b, the C plane controller 41a is used if the lowermost digit of the terminal number of the mobile terminal unit 2 is an even number, and the C plane controller 41b is used if it is an odd number, is changed such that when there are three C plane controllers 41a to 41c, the C plane controller 41a is used if the lowermost digit of the terminal number is 0, 1, 2, or 3, the C plane controller 41b is used if it is 4, 5, or 6, and the C plane controller 41c is used if it is 7, 8, or 9. In this manner, the throughput can be increased by about 1.5 times.

Separately, a U plane controller transfers user data, so the throughput may become insufficient if the transmission/reception data amount to be transferred by each mobile terminal unit increases. In this case, the processing can be easily dispersed by adding a new U plane controller. For example, an arrangement in which Node Bs 6a to 6f are connected three by three to two U plane controllers 42a and 42b is changed to an arrangement in which Node Bs 6a to 6f are connected two by two to three U plane controllers 41a to 42c. In this way, the transfer rate can be readily increased by about 1.5 times.

Furthermore, if the UPE 42a has failed, the replacement of a Node B under the control of this UPE can be easily switched to another normal UPE.

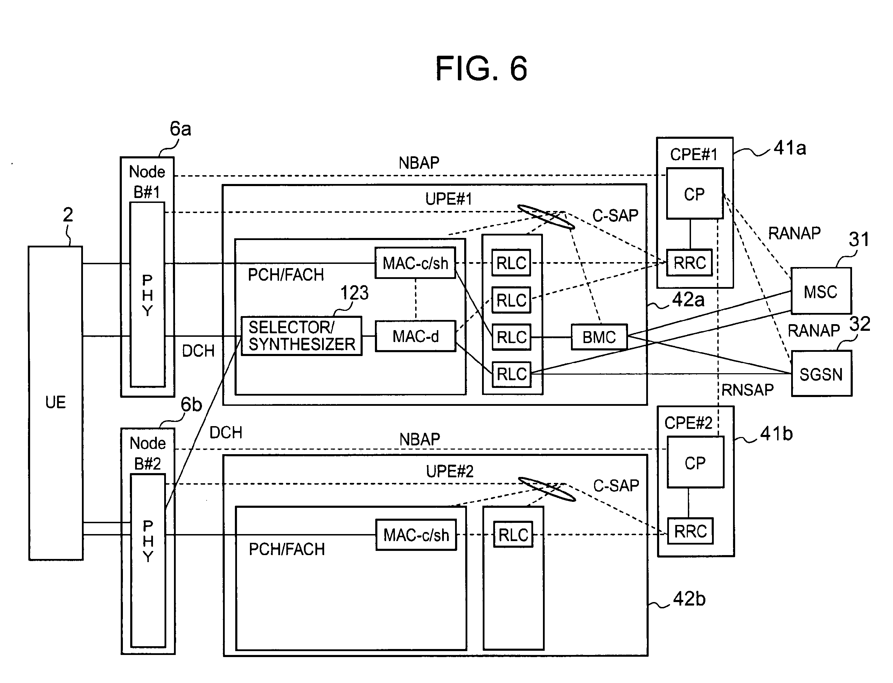

Fig. 6 is a view showing the state in which the mobile terminal unit UE 2 is performing soft handover between the Node Bs 6a and 6b. DCHs are connected from both the Node Bs 6a and 6b to the terminal 2. By selection and synthesis by the selector/synthesizer 123 in the U plane controller 42a, a channel having higher channel quality is selected from the Node Bs 6a and 6b and transmitted to the host apparatus.

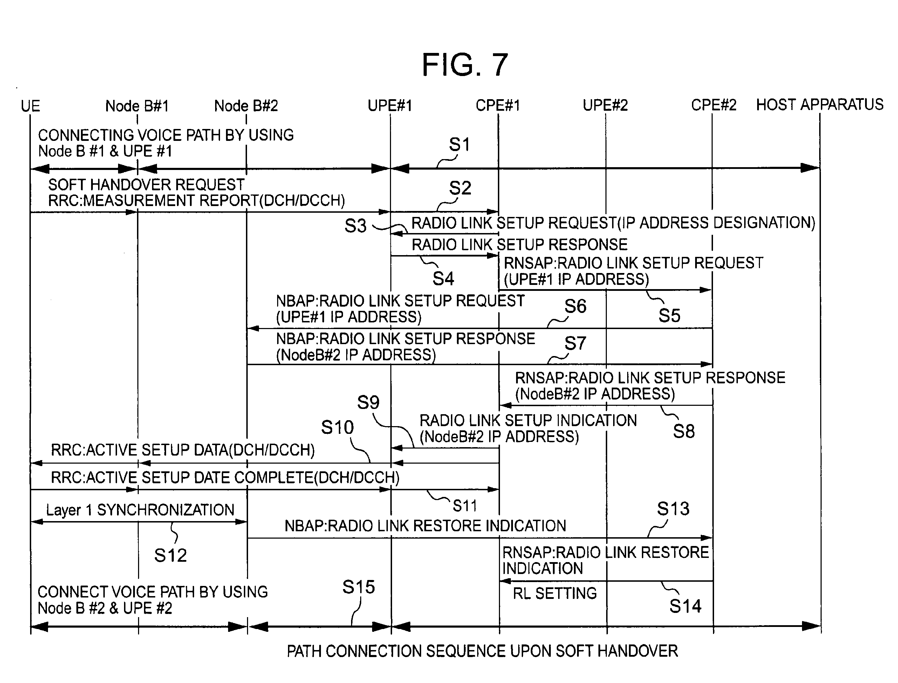

Fig. 7 shows a sequence in which the mobile terminal unit UE performs voice communication by using a Node B #1 (6a) and U plane controller (UPE) #1 (42a) (step S1), requests a Node B #2 (6b) for soft handover, and connects a path between the terminal UE and Node B #2. A C plane controller (CPE) #1 (41a) manages the resources of a U plane controller #1 and the Node B #1, and a C plane controller #2 (41b) manages the resources of the U plane controller #2 (42b) and Node B #2.

The soft handover request is notified, as "MEASUREMENT REPORT (RRC)", from the terminal UE to the C plane controller #1 via the Node B #1 and U plane controller #1 (step S2). The C plane controller #1 acquires an IP address for soft handover with respect to the U plane controller #1, and notifies the U plan controller #1 of the IP address together with "RADIO LINK SETUP REQUEST" (step S3). The U plane controller #1 responds to the C plane controller #1 by "RADIO LINK SETUP RESPONSE" (step S4).

Then, the C plane controller #1 transmits, to the C plane controller #2 which manages the Node B #2 as the transfer destination, "RADIO LINK SETUP REQUEST (RNSAP)" and the IP address, which is acquired for soft handover, of the U plane controller #1 (step S5), and the C plane controller #2 transmits, to the Node B #2, "RADIO LINK SETUP REQUEST (NBAP)" and the IP address, which is acquired for soft handover, of the U plane controller #1 (step S6).

When notifying the C plane controller #2 of "RADIO LINK SETUP RESPONSE (NBAP)", the Node B #2 also notifies its IP address (step S7). Then, the C plane controller #2 notifies the C plane controller #1 of "RADIO LINK SETUP RESPONSE (RNSAP)" together with the IP address of the Node B #2 (step S8). The C plane controller #1 notifies the U plane controller #1 of the IP address of the Node B #2 by "RADIO LINK SETUP INDICATION" (step S9).

By the above procedures, the U plane controller #1 is notified of the IP address of the Node B #2, and the Node B #2 is notified of the IP address of the U plane controller #1, so user data can be transmitted and received. At the same time, the C plane controller #1 notifies the terminal UE of "ACTIVE SET UPDATE (RRC)" (step S10). When the terminal UE notifies the C plane controller #1 of "ACTIVE SET UPDATE COMPLETE (RRC)" (step S11), radio synchronization is started between the terminal UE and Node B #2 (step S12).

After layer 1 (L1) synchronization of the radio channel between the terminal UE and Node B #2 is completed, the Node B #2 notifies the C plane controller #2 of "RADIO LINK RESPONSE INDICATION (NBAP)" (step S13). The C plane controller #2 transmits "RADIO LINK RESTORE INDICATION (RNSAP)" to the C plane controller #1 (step S14), the setting of the path between the terminal UE and Node B #2 is completed, and the soft handover path connecting to the U plane controller #1 via the Node Bs #1 and #2 is set (step S15).

In the present invention as described above, soft handover across RNCs can be performed by connecting a path from a single U plane controller to a plurality of Node Bs, without setting any path between the drift RNC and serving RNC in relation to user data unlike in the conventional systems. Therefore, the same U plane controller can be kept used, no paths between the RNCs are necessary, the resources can be effectively used, and a delay caused by transferring data via the RNCs can be prevented.

A modification in which an RNC is separated into a C plane controller and U plane controller, and the U plane controller is incorporated into a Node B is also possible. In this modification, if the U plane controller incorporated into the Node B does not have the function (the selector/synthesizer 123 shown in Fig. 4) of executing selection and synthesis of user data, no soft handover can be executed via a plurality of Node Bs. This is equivalent to discarding the merits of the use of CDMA in a radio section. It is, therefore, possible to give each Node B a function of selecting and synthesizing user data, and perform communication between the Node Bs.

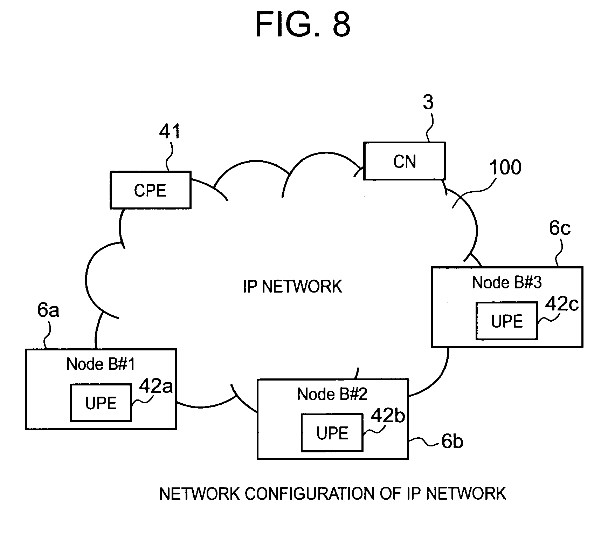

Fig. 8 shows a network configuration in which an RNC is separated into a C plane controller 42 and U plane controller 41, and U plane controllers 42a to 42c are incorporated into Node Bs 6a to 6c, respectively. The Node Bs 6a to 6c, the C plane controller 41, and a CN 3 are connected across an IP network 100.

A method of executing handover including a plurality of Node Bs in the IP network shown in Fig. 8 will be explained below. Assume that the C plane controller 41 knows the IP address of each Node B.

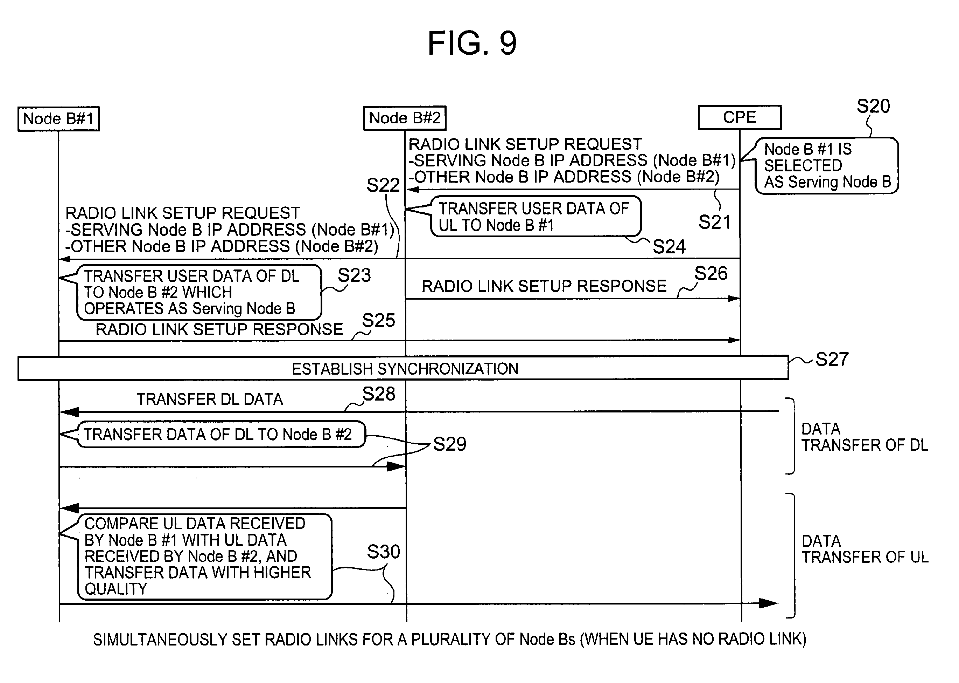

Fig. 9 shows an example in which a radio link (RL) is set via two Node Bs from the state in which a terminal UE has no radio link (RL). From a plurality of Node Bs (in Fig. 9, a Node B #1 and Node B #2), the C plane controller (CPE) selects a Node B as a serving node (in Fig. 9, the Node B #1) (step S20). The C plane controller notifies a Node B of the IP address of the serving Node B (in Fig. 9, the Node B #1) and the IP address of the other Node B (in Fig. 9, the Node B #2) by a "Radio Link Setup Request" message, such that these two IP addresses can be distinguished from each other (steps S21 and S22).

The C plane controller designates a Node B which controls a cell having the highest quality as a serving Node B. The Node B compares its own IP address with the IP address of the serving Node B, and, if its own IP address and the IP address of the serving Node B are equal, recognizes that the Node B itself is the serving Node B (step S22). The other Node Bs recognize the IP address of the serving Node B as the transfer destination of UL (UpLink) data (step S24).

When assuring resources necessary to set a radio link, each Node B returns a "Radio Link Setup Response" message to the C plane controller (steps S25 and S26). After that, U plane synchronization is established (step S27).

In the case of DL (DownLink) data transfer (step S28), the serving Node B transfers data to the IP address of the other Node B notified by the "Radio Link Setup Request" message (step S29). In the case of UL (UpLink) data transfer, the serving Node B compares data received from the individual Node Bs, and transfers data having the highest quality to the host (step S30).

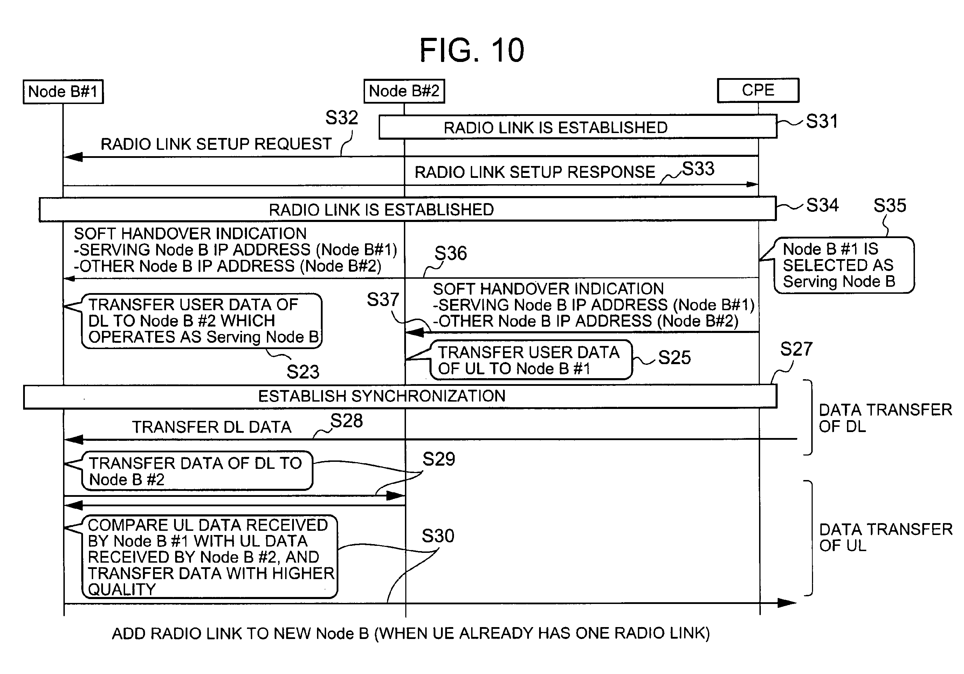

Fig. 10 shows an example in which soft handover occurs when a radio link is added via a new Node B from the state in which a mobile terminal unit already has a radio link. In this case, it is necessary to notify a Node B (in Fig. 10, a Node B #2) of the IP address of a serving Node B and the IP address of a Node B included in soft handover (step S31).

First, therefore, a radio link is set for a new Node B (in Fig. 10, a Node B #1) by using "Radio Link Setup Request" message (step S32) and "Radio Link Setup Response" message (step S33). After that, all Node Bs included in soft handover are notified of the IP address of the serving Node B and the IP address of the Node B included in soft handover.

As a means for the purpose, a "Soft Handover Indication" message is newly proposed (steps S36 and S37). This message contains the IP address of the serving Node B and the IP address of the Node B included in soft handover. The operation after that is the same as in Fig. 9, and indicated by the same reference numerals as in Fig. 9.

Figs. 9 and 10 each show soft handover including two Node Bs as an example. However, the above mechanism is applicable to a case in which two or more Node Bs are included in soft handover. In this case, a plurality of IP addresses are set in "Other Node B IP address" in steps S36 and S37 of Figs. 9 and 10.

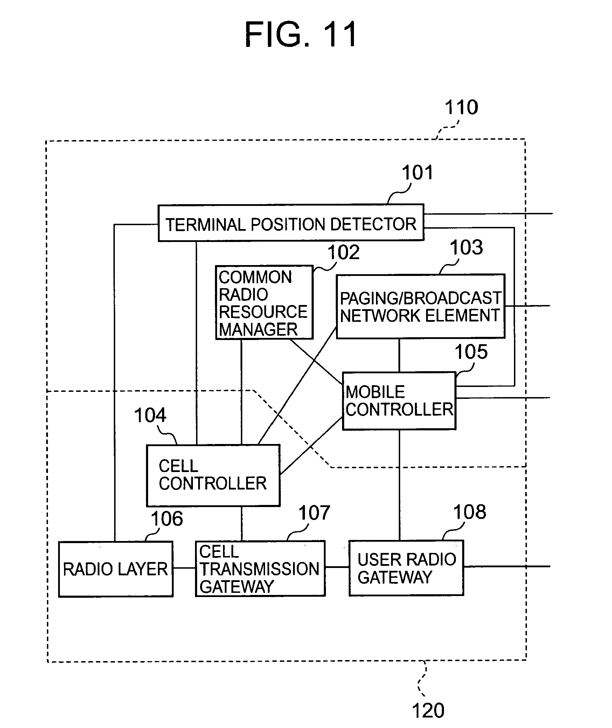

Fig. 11 is a view showing an example in which the overall function of the open RAN architecture shown in Fig. 3 is divided into two control functions. With reference to Fig. 11, this example comprises a terminal position detector 101 which collects and calculates the positions of terminals, a common radio resource manager 102 which manages the radio access network environment and optimizes the network load, a paging/broadcast network element 103 which controls the flows of radio broadcast/multicast and notifies the states of radio broadcast/multicast, a cell controller 104 which controls permission, congestion, and allocation of radio access to each radio base station apparatus, a mobile controller 105 which establishes and releases a transmission channel, a cell transmission gateway 107 which transmits individual radio channel signals and perform multiplexing/separation of a common radio channel signal, a user radio gateway 108 which encrypts and decrypts a radio channel and controls compression, multiplexing/separation, and retransmission of a header, and a radio layer 106 which generates position information of a terminal, encodes and decodes a radio channel, or controls the electric power of a radio channel. These components are the same as shown in Fig. 3.

In this example, a terminal resource control unit 110 as a first control means is formed by the components for controlling the terminal resources, i.e., the terminal position detector 101, common radio resource manager 102, paging/broadcast network 103, and mobile controller 105. Also, a base station resource control unit 120 as a second control means is formed by the components for controlling the base station resources, i.e., the radio layer 106, cell transmission gateway 107, and user radio gateway 108.

By the use of the apparatus configuration described above, a system configuration having high scalability can be assembled. Namely, to increase the signaling throughput, the terminal resource control unit 110 alone can be added, and, to increase the user data transfer rate, the base station resource control unit 120 alone can be added.

Also, since all the radio specific control portions are formed in the base station resource control unit 120, it is no longer necessary to exchange large amounts of signals between devices even when the U plane control function and C plane control function are separated. Furthermore, when this configuration is applied to mobile communication systems having different radio schemes, it is only necessary to prepare base station resource control units 120 which are equal in number to the radio schemes, and each of which performs control matching the corresponding radio scheme. Since all the base station resource control units 120 are controlled together by the terminal resource control unit 110, multiple areas can be controlled by a small scale.

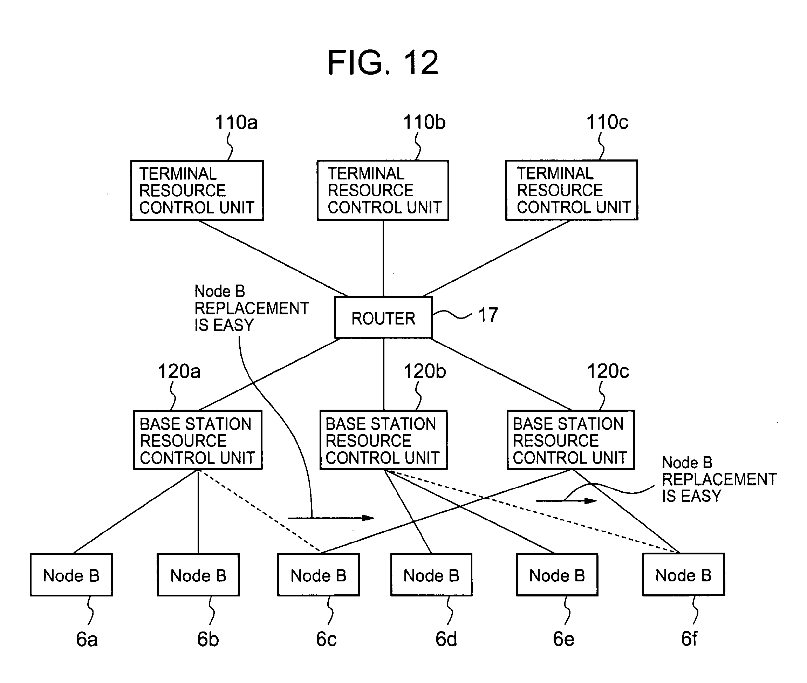

Fig. 12 is a view for explaining the ability to ensure the scalability between the terminal resource control unit 110 and base station resource control unit 120 shown in Fig. 11. Terminal resource control units 110a to 110c and base station resource control units 120a to 120c are connected via a device 17 such as an IP router or hub. Conventionally, the terminal resource control unit 110 and base station resource control unit 120 are integrated into a single RNC device, so they can be added only in the form of an RNC. However, the terminal resource control unit 110 performs a signaling process such as a calling process, so the throughput may become insufficient if the amount of calls increases. In this case, the processing can be easily dispersed by adding a new terminal resource control unit 110. An example is the same as explained with reference to Fig. 5.

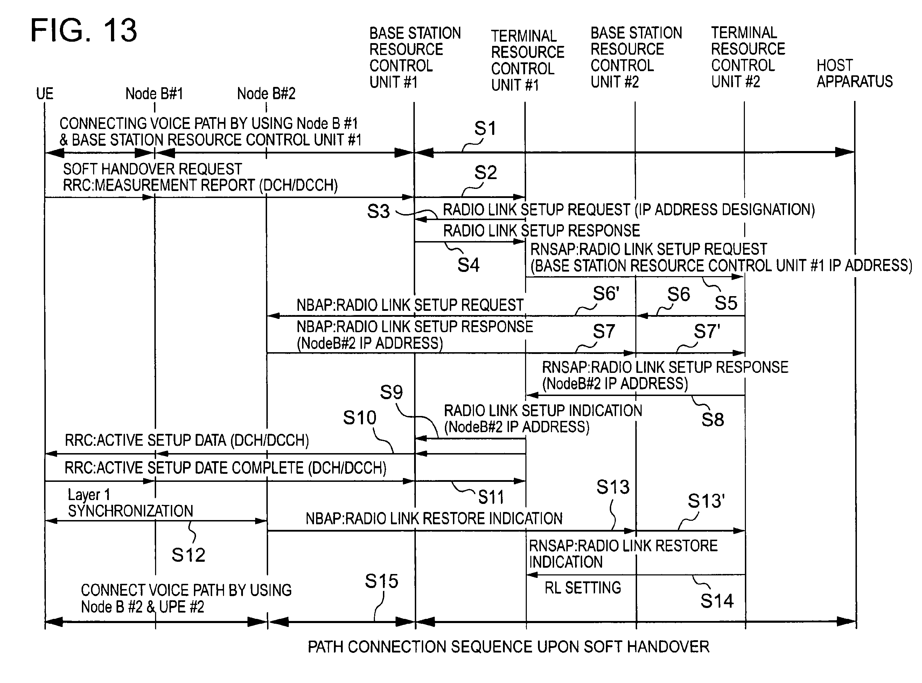

Fig. 13 shows a sequence in which, in the mobile communication system shown in Figs. 11 and 12, a mobile terminal unit UE performs voice communication by using a Node B #1 (6a) and base station resource control unit #1 (120a) (step S1), requests a Node B #2 (6b) for soft handover, and connects a path between the terminal UE and Node B #2. Note that Fig. 13 corresponds to the sequence shown in Fig. 7, and the same reference numerals denote the same steps.

A terminal resource control unit #1 (110a) manages the resources of the base station resource control unit #1 and Node B #1, and a terminal resource control unit #2 (110b) manages the resources of a base station resource control unit #2 (120b) and the Node B #2. The soft handover request is notified, as "MEASUREMENT REPORT (RRC)", from the terminal UE to the terminal resource control unit #1 via the Node B #1 and base station resource control unit #1 (step S2).

The terminal resource control unit #1 acquires an IP address for soft handover with respect to the base station resource control unit #1, and, on the basis of megacop (IETF RFC3015), notifies the base station resource control unit #1 of the IP address together with "RADIO LINK SETUP REQUEST" (step S3). On the basis of megacop (IETF RFC3015), the base station resource control unit #1 responds to the terminal resource control unit #1 by "RADIO LINK SETUP RESPONSE" (step S4).

Then, the terminal resource control unit #1 transmits, to the terminal resource control unit #2 which manages the Node B #2 as the transfer destination, "RADIO LINK SETUP REQUEST (RNSAP)" and the IP address, which is acquired for soft handover, of the base station resource control unit #1 (step S5), and the terminal resource control unit #2 transmits, to the Node B #2 via the base station resource control unit #2, "RADIO LINK SETUP REQUEST (NBAP)" and the IP address, which is acquired for soft handover, of the base station resource control unit #1 (steps S6 and S6').

When notifying the terminal resource control unit #2 of "RADIO LINK SETUP RESPONSE (NBAP)", the Node B #2 notifies its IP address via the base station resource control unit #2 (steps S7 and S7'). Then, the terminal resource control unit #2 notifies the terminal resource control unit #1 of "RADIO LINK SETUP RESPONSE (RNSAP)" together with the IP address of the Node B #2 (step S8).

The terminal resource control unit #1 notifies the base station resource control unit #1 of the IP address of the Node B #2 by "RADIO LINK SETUP INDICATION" (step S9). By these means, the base station resource control unit #1 is notified of the IP address of the Node B #2, and the Node B #2 is notified of the IP address of the base station resource control unit #1, so user data can be transmitted and received. At the same time, the terminal resource control unit #1 notifies the terminal UE of "ACTIVE SET UPDATE (RRC)" (step S10).

When the terminal UE notifies the terminal resource control unit #1 of "ACTIVE SET UPDATE COMPLETE (RRC)" (step S11), radio synchronization is started between the terminal UE and Node B #2 (step S12).

After layer 1 (L1) synchronization of the radio channel between the terminal UE and Node B #2 is completed, the Node B #2 notifies the terminal resource control unit #2 of "RADIO LINK RESPONSE INDICATION (NBAP)" via the base station resource control unit #2 (steps S13 and S13).

The terminal resource control unit #2 transmits "RADIO LINK RESTORE INDICATION (RNSAP)" to the terminal resource control unit #1 (step S14), the setting of the path between the terminal UE and Node B #2 is completed, and the soft handover path connecting to the base station resource control unit #1 via the Node Bs #1 and #2 is set (step S15).

In the present invention as described above, soft handover across RNCs can be performed by connecting a path from a single base station resource control unit to a plurality of Node Bs, without setting any path between the drift RNC and serving RNC in relation to user data unlike in the conventional systems. Therefore, the same base station resource control unit can be kept used, no paths between the RNCs are necessary, the resources can be effectively used, and a delay caused by transferring data via the RNCs can be prevented.

A modification in which an RNC is separated into a terminal resource control unit and base station resource control unit, and the base station resource control unit is incorporated into a Node B is also possible. In this modification, if the base station resource control unit incorporated into the Node B does not have the function of executing selection and synthesis of user data, no soft handover can be executed via a plurality of Node Bs. This is equivalent to discarding the merits of the use of CDMA in a radio section. It is, therefore, possible to give each Node B a function of selecting and synthesizing user data, and perform communication between Node Bs.

Note that in Figs. 8 to 10, similar functional operations can be performed by replacing the CPE with the terminal resource control unit and the UPE with the base station resource control unit.

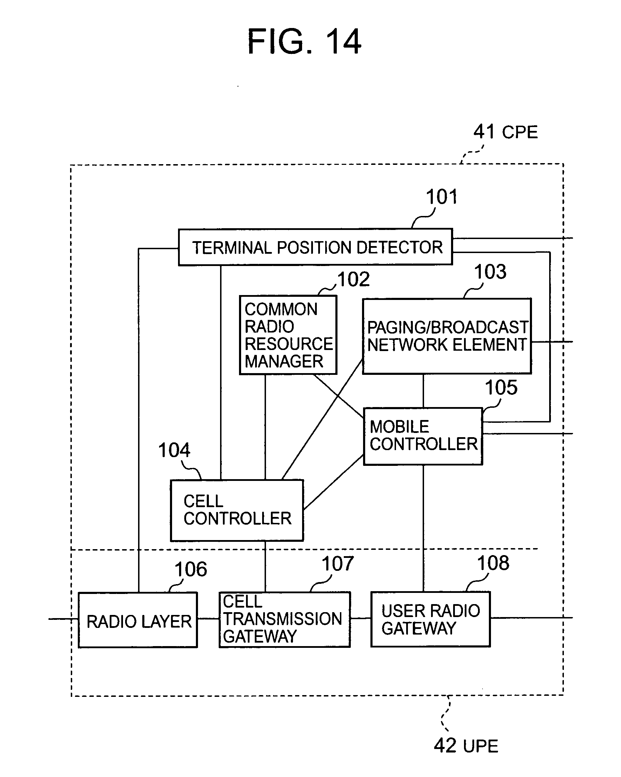

Fig. 14 is a functional block diagram when the arrangement in which the RAN is separated into the CPE 41 and UPE 42 by using a protocol architecture form is rewritten by using an open RAN architecture form. The same reference numerals as in Fig. 11 denote the same parts in Fig. 14. That is, a cell controller 104 which is the element which forms the terminal resource control unit 110 in Fig. 11 is an element which forms a CPE in Fig. 14, and a radio layer 106, cell transmission gateway 107, and user radio gateway 108 form a UPE 42.

As described above, as shown in Fig. 4 or 11, when the RAN is physically separated into the CPE 41 and UPE 42, or into the terminal resource control unit 110 and base station resource control unit 120, Node B replacement can be easily performed as shown in Fig. 5 or 12. In this case, as shown in Fig. 5 or 12, if a plurality of CPEs or terminal resource control units exist, one of these devices must representatively control Node B replacement.

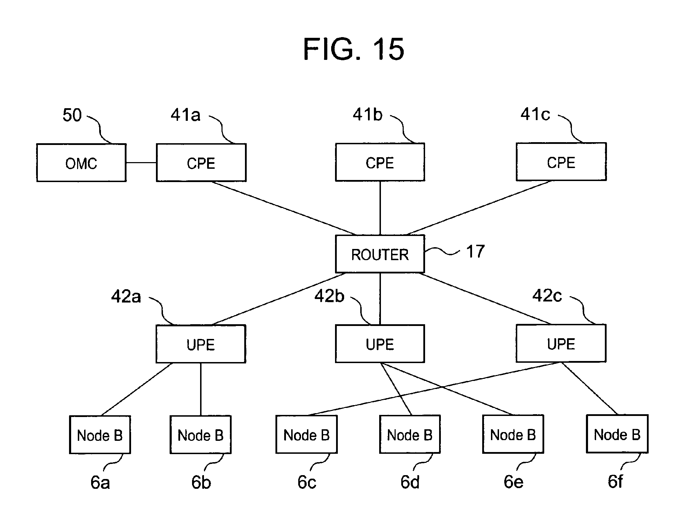

That is, as shown in Fig. 15, for example, in a system in which a plurality of CPEs (41a to 41c) exist, an OMC (Operating and Maintenance Center) 50 having functions of, e.g., displaying the state of each device and setting the state of each device by allowing an operator to input commands can be connected to the CPE 41a. In this case, however, the CPE 41a must have a function of controlling Node B replacement under the control of the OMC 50, in addition to functions of the CPEs 41b and 41c. Consequently, all the CPEs cannot be given the same function, so the efficiency is low in both cost and manufacture. This problem also arises in the system having a plurality of terminal resource control units as shown in Fig. 12.

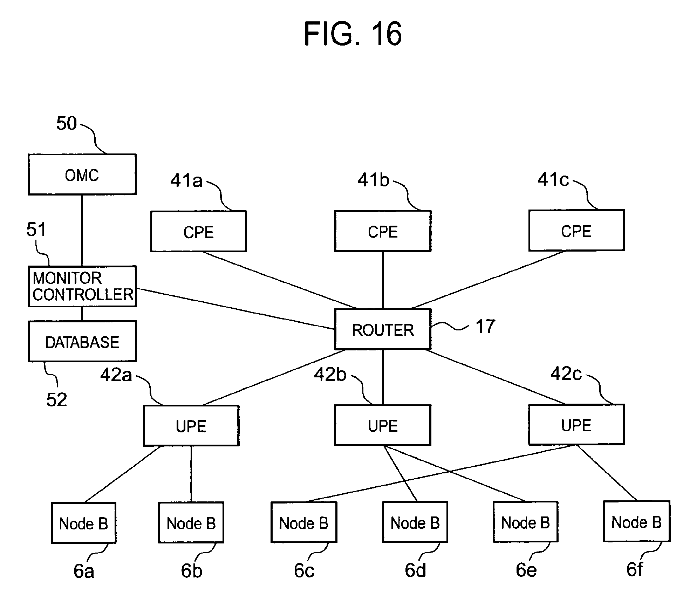

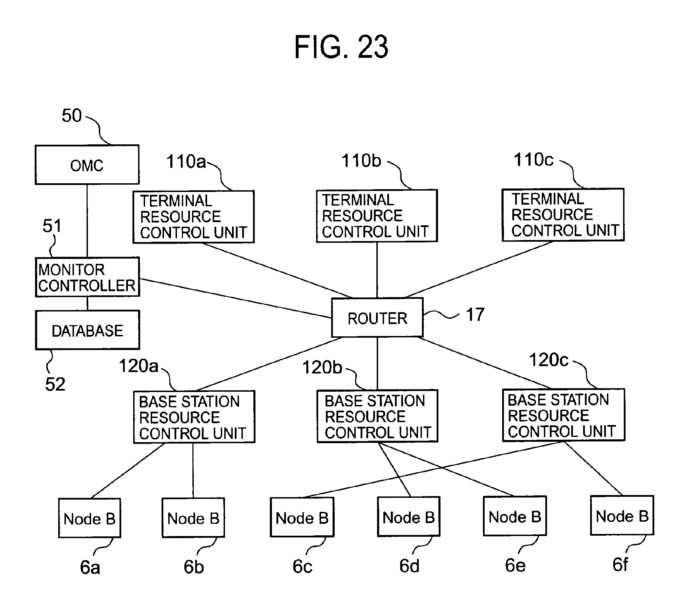

In the present invention, therefore, as indicated by an embodiment shown in Fig. 16, all of a plurality of CPEs can be given the same function. Also, as indicated by another embodiment shown in Fig. 23, all of a plurality of terminal resource control units can be given the same function.

First, the embodiment shown in Fig. 16 will be explained below. Note that the same reference numerals as in Fig. 5 denote the same parts in Fig. 16. Referring to Fig. 16, an OMC 50 is connected to a radio base station replacement control apparatus (monitor controller) 51 having a function of controlling Node B replacement. The monitor controller 51 is connected to other devices via a router 17.

The monitor controller 51 is connected to a database 52 which stores the relationship between address information (an IP address which is identification information unique to each Node B) of each Node B under the control of each UPE, and cell information (cell address information which is identification information unique to each cell) under the control of each Node B. Note that although the database 52 is independent of the monitor controller 51, the database 52 may, of course, also be an internal memory of the monitor apparatus.

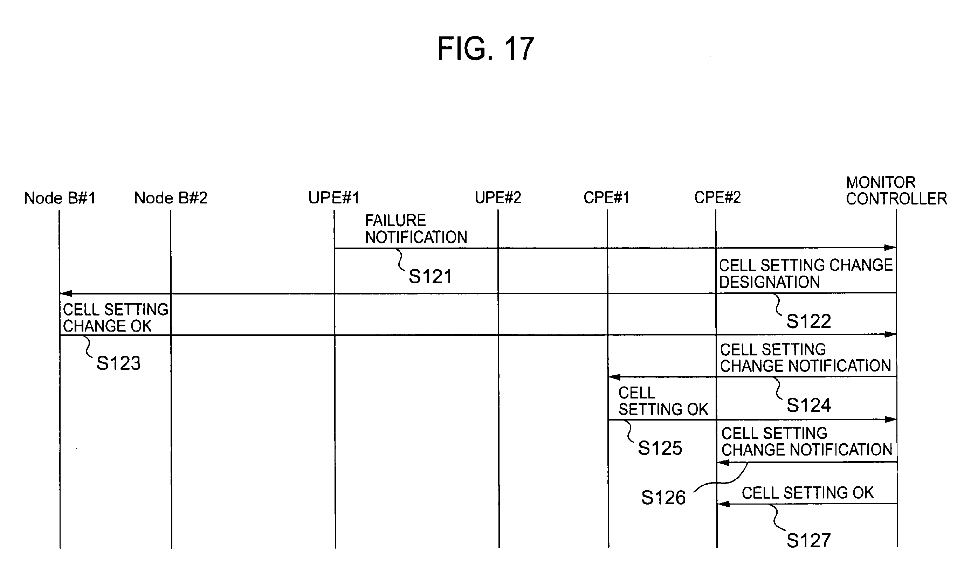

An operation sequence by which the monitor controller 51 manually or automatically makes decisions and performs Node B replacement when, for example, a UPE #1 has failed will be explained below with reference to Fig. 17. Assume that a Node B #1 is under the control of the UPE #1, and a Node B #2 is under the control of a UPE #2. If a failure is detected in the UPE #1, the monitor controller is notified of the detection of the failure (step S121). It is also possible, by assuming that the UPE #1 may become completely inoperable, to periodically transmit packets from the monitor controller and determine that a failure has occurred if no response is returned.

The monitor controller switches the control over the Node B from the UPE #1 to the UPE #2. This switching will be referred to as cell setting change hereinafter. The monitor controller designates cell setting change (switching of the control from the UPE #1 to the UPE #2) to the Node B #1 (step S122). This cell setting change designation contains address information, which indicates the change destination, of the UPE #2. The Node B #1 changes the setting so as to be placed under the control of the UPE #2. Then, the Node B #1 returns a response indicating cell setting change OK to the monitor controller (step S123).

In this network configuration, each CPE must have address information of all UPEs and cell information of Node Bs under the control of the CPE. Accordingly, the monitor controller notifies a CPE #1 and CPE #2 of the cell information change (steps S124 and S126), and waits for an OK response (steps S125 and S127), thereby completing the Node B replacement.

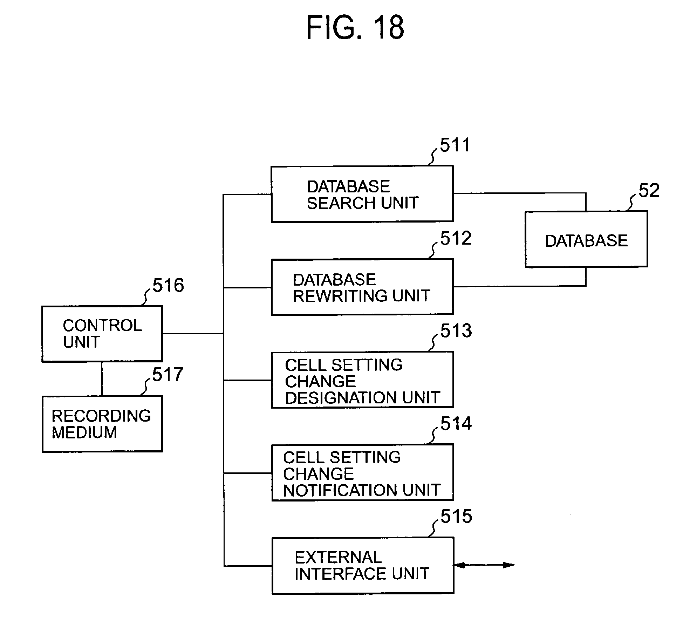

Fig. 18 is a functional block diagram of the monitor controller 51. This arrangement includes a database search unit 511 for searching a database 51, a database rewriting unit 512 for rewriting the contents of the database 511, a cell setting change designation unit 513 for generating a cell setting change designation to a Node B, a cell setting change notification unit 514 for notifying a CPE of cell setting change in response to the reception of cell setting change OK from a Node B, an external interface unit 515, a control unit (CPU) 516 for controlling these units, and a recording medium 517 storing control sequences as programs.

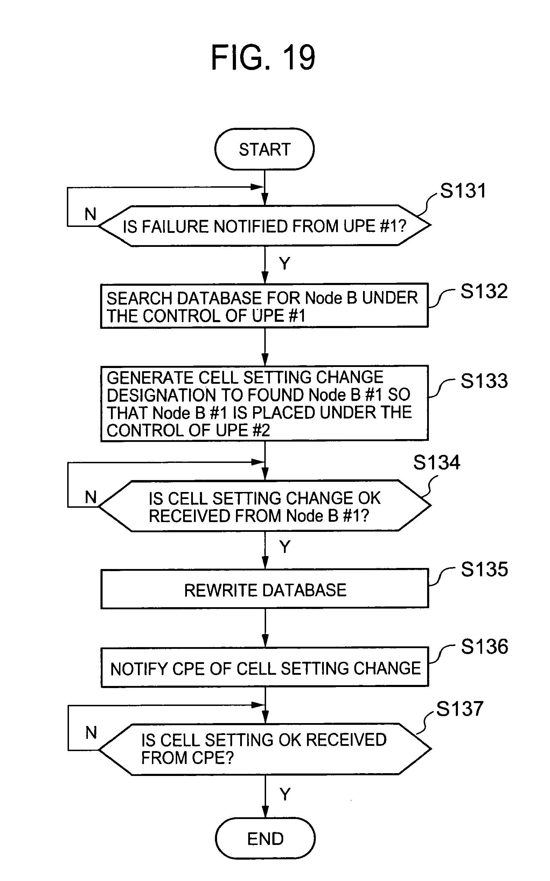

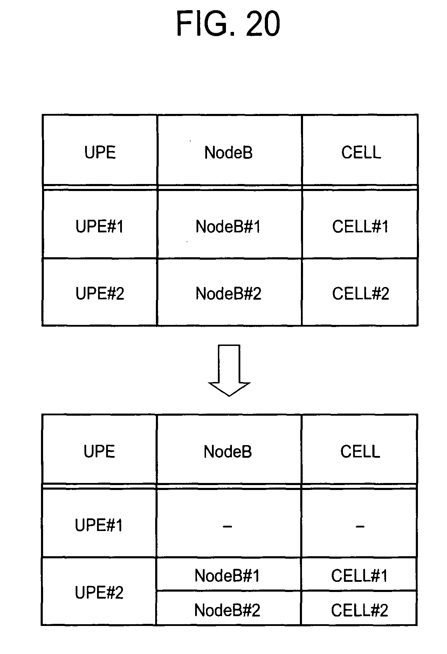

Fig. 19 is a flowchart showing the operation of the monitor controller. When receiving failure notification (step S121 in Fig. 17) from the UPE #1 (step S131), the monitor controller searches the database 52 for a Node B under the control of the UPE #1 (step S132). The contents of the database 52 in this case are as shown in the upper half of Fig. 20. That is, the database 52 stores the correspondence of address information of a Node B presently under the control of each UPE to address information of a cell under the control of the Node B.

As a result of this search, the Node B #1 under the control of the UPE #1 in which the failure has occurred is found, the monitor controller generates and transmits a cell setting change designation to the Node B #1 so that the Node B #1 is placed under the control of the UPE #2 (step S133). This cell setting change designation naturally contains address information of the UPE #2 as the cell change destination. In this case, the control over the Node B is switched from the UPE in which the failure has occurred to another UPE by various methods, e.g., a method by which the control is switched to a UPE which is physically close and has a light load, and the method is not particularly limited.

When receiving cell setting change OK from the Node B #1 (step S134), the monitor controller rewrites the database 52 as shown in the lower half of Fig. 20 (step S35) , and notifies the CPEs #1 and #2 of the cell setting change, i.e., the address information of the Node B as an object of the cell setting change and the address information of the UPE as the change destination (step S136). When cell setting OK is returned from each CPE after that (step S137), the processing is terminated.

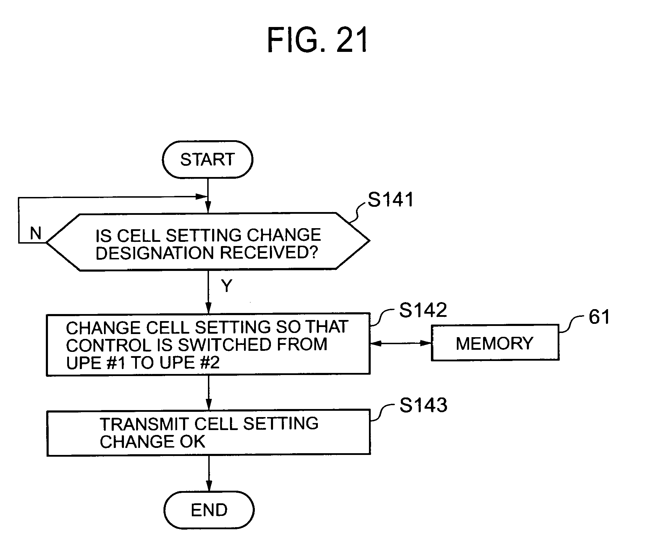

Fig. 21 is a flowchart showing the operation of the Node B #1. When the cell setting change designation is transmitted from the monitor controller (step S141), the Node B #1 changes the cell setting such that the Node B #1 presently under the control of the UPE #1 is placed under the control of the UPE #2 (step S142). This cell setting change means that the address information of the UPE having the control is changed from #1 to #2 in a memory 61. Then, the Node B #1 transmits, to the monitor controller, cell setting change OK indicating that the cell setting change is completed (step S143).

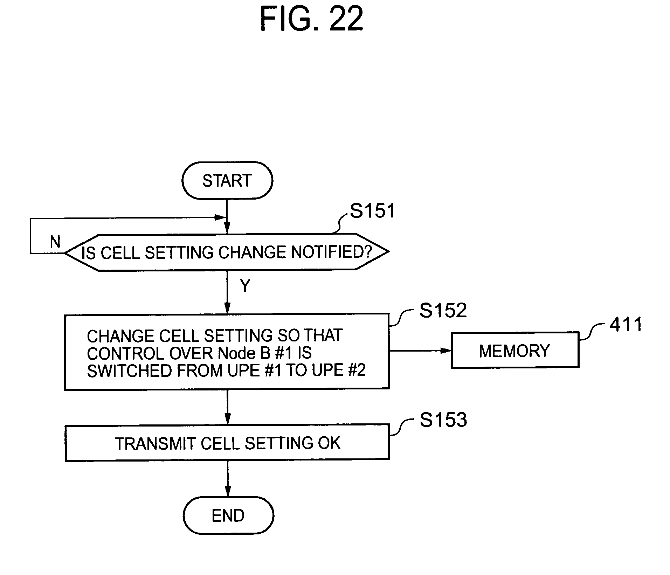

Fig. 22 is a flowchart showing the operation of the CPE. When the cell setting change notification is transmitted from the monitor controller (step S151), the CPE changes the cell setting on the basis of information, contained in this notification, which indicates that the control over the Node B #1 is switched from the UPE #1 to the UPE #2 (step S152). This cell setting change means rewriting the information to indicate that the control over the Node B #1 is switched from the UPE #1 to the UPE #2, in a memory 411. After that, the CPE transmits, to the monitor controller, cell setting OK indicating that the cell setting change is completed (step S153).

Fig. 23 shows a system configuration related to another embodiment of the present invention, which corresponds to the system configuration shown in Fig. 12, and in which the same reference numerals as in Fig. 12 denote the same parts. In this embodiment, an RNC is separated into a plurality of terminal resource control units and a plurality of base station resource control units. The system includes a monitor controller 51, and an OMC 50 is connected to the monitor controller 51 in this embodiment as well. The monitor controller 51 is connected to other devices via a router 17.

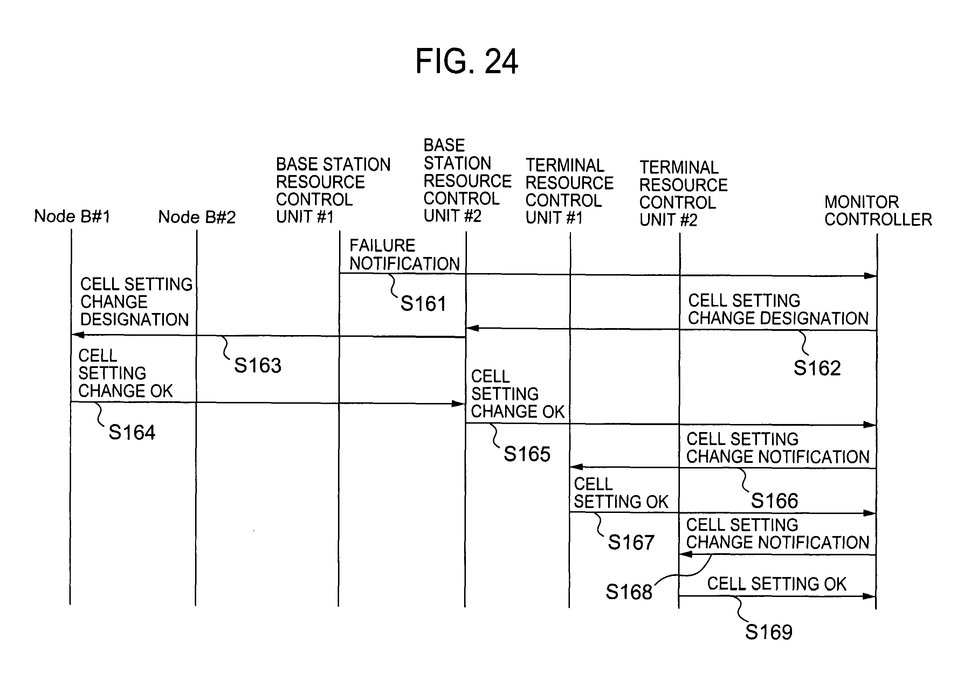

An operation sequence by which the monitor controller 51 manually or automatically makes decisions and performs Node B replacement when, for example, a base station resource control unit #1 has failed will be explained below with reference to Fig. 24. Assume that a Node B #1 is under the control of the base station resource control unit #1, and a Node B #2 is under the control of a base station resource control unit #2.

If a failure is detected in the base station resource control unit #1, the monitor controller is notified of the detection of the failure (step S161). It is also possible, by assuming that the base station resource control unit #1 may become completely inoperable, to periodically transmit packets from the monitor controller and determine that a failure has occurred if no response is returned.

The monitor controller switches the control over the Node B from the base station resource control unit #1 to the base station resource control unit #2. This switching will be referred to as cell setting change hereinafter. The monitor controller designates cell setting change to the base station resource control unit #2 (step S162). This cell setting change designation contains address information of the Node B #1 to be changed. The base station resource control unit #2 changes the cell setting so that the Node B #1 is placed under the control of the base station resource control unit #2, and transmits a cell setting change designation to the Node B #1 (step S163). This cell setting change designation contains address information, which indicates the change destination, of the base station resource control unit #2.

The Node B #1 changes the setting so as to be placed under the control of the base station resource control unit #2. Then, the Node B #1 returns a response indicating cell setting change OK to the base station resource control unit #2 (step S164). The base station resource control unit #2 transmits a response indicating cell setting change OK to the monitor controller (step S165).

In this network configuration, each terminal resource control unit must have address information of all base station resource control units and cell information of Node Bs under the control of the terminal resource control unit. Accordingly, the monitor controller notifies terminal resource control units #1 and #2 of the cell information change (steps S166 and S168), and waits for an OK response (steps S167 and S169), thereby completing the Node B replacement.

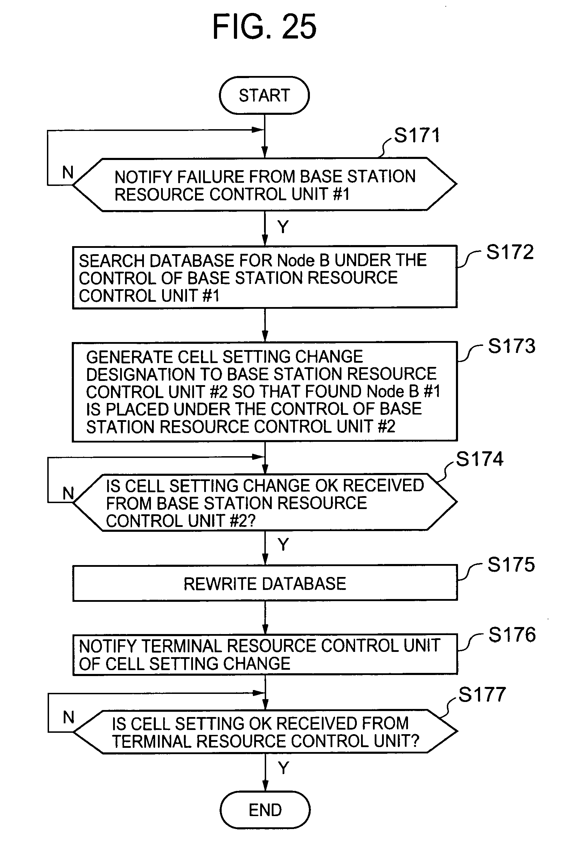

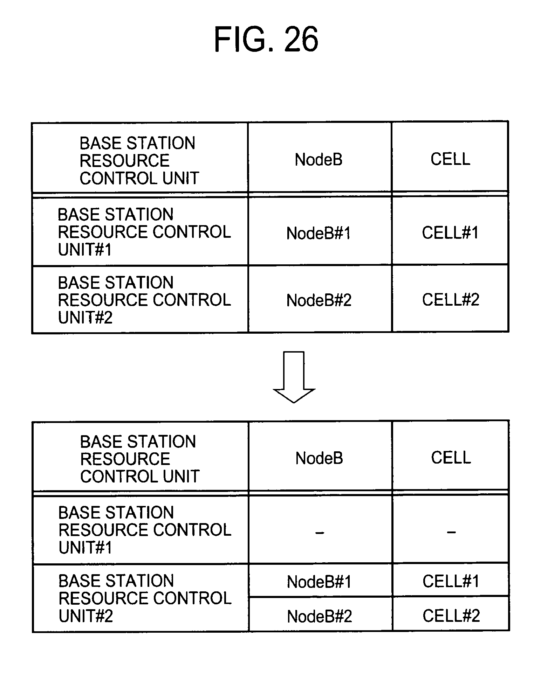

The functional blocks of the monitor controller in this embodiment are the same as shown in Fig. 18 of the above embodiment. Fig. 25 is a flowchart showing the operation of the monitor controller in this embodiment. When receiving the failure notification (step S161 in Fig. 24) from the base station resource control unit #1 (step S171), the monitor controller searches a database 52 for a Node B under the control of the base station resource control unit #1 (step S172). The contents of the database 52 in this case are as shown in the upper half of Fig. 26. That is, the database 52 stores the correspondence of address information of a Node B presently under the control of each base station resource control unit to address information of a cell under the control of the Node B.

As a result of this search, the Node B #1 under the control of the base station resource control unit #1 in which the failure has occurred is found, and the monitor controller generates and transmits a cell setting change designation to the base station resource control unit #2 so that the Node B #1 is placed under the control of the base station resource control unit #2 (step S173). This cell setting change designation naturally contains address information of the Node B #2 as an object of the cell change. In this case, the control over the Node B is switched from the base station resource control unit in which the failure has occurred to another base station resource control unit by various methods, e.g., a method by which the control is switched to a base station resource control unit which is physically close and has a light load, and the method is not particularly limited.

When receiving cell setting change OK from the base station resource control unit #2 (step S174), the monitor controller rewrites the database 52 as shown in the lower half of Fig. 26 (step S175), and notifies the terminal resource control units #1 and #2 of the cell setting change, i.e., the address information of the Node B as an object of the cell setting change and the address information of the base station resource control unit as the change destination (step S176). When cell setting OK is returned from each terminal resource control unit after that (step S177), the processing is terminated.

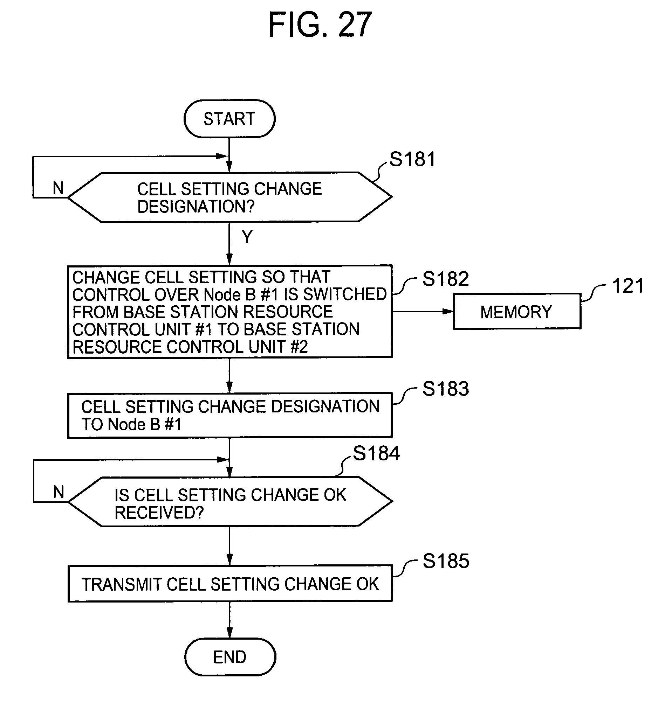

Fig. 27 is a flowchart showing the operation of the base station resource control unit #2. When the cell setting change designation is transmitted from the monitor controller (step S181), the base station resource control unit #2 changes the cell setting such that the control over the Node B #1 is switched from the base station resource control unit #1 to the base station resource control unit #2 (step S182). This cell setting change means that #1 is added to the address information of the Node B under the control, in a memory 121. Then, the base station resource control unit #2 transmits a cell setting change designation to the Node B #1 (step S183). When receiving cell setting change OK indicating that the cell setting change is completed from the Node B #1 (step S184), the base station resource control unit #2 transmits cell setting change OK to the monitor controller (step S185).

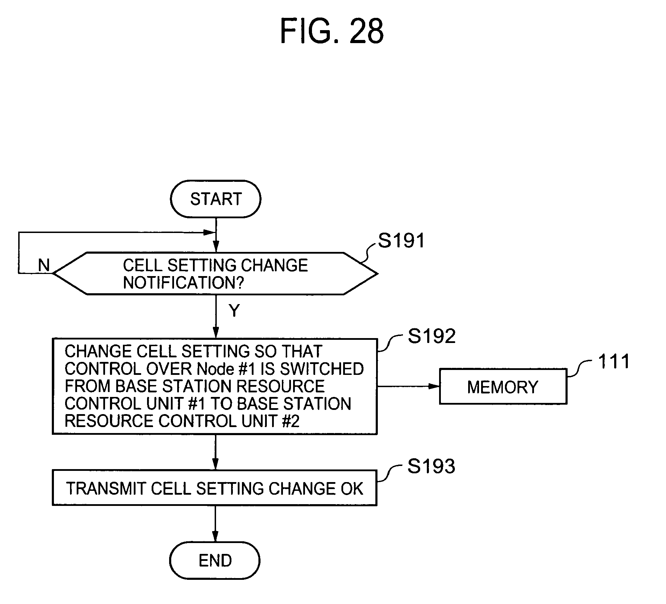

Fig. 28 is a flowchart showing the operation of the terminal resource control unit. When the cell setting change notification is transmitted from the monitor controller (step S191), the terminal resource control unit changes the cell setting on the basis of information, contained in this notification, which indicates that the control over the Node B #1 is switched from the base station resource control unit #1 to the base station resource control unit #2 (step S192). This cell setting change means rewriting the information to indicate that the control over the Node B #1 is switched from the base station resource control unit #1 to the base station resource control unit #2, in a memory 111. After that, the terminal resource control unit transmits, to the monitor controller, cell setting OK indicating that the cell setting change is completed (step S193).

Note that in each embodiment described above, the monitor controller 51 performs Node B replacement by using the failure notification or failure detection from the UPE or base station resource control unit as a trigger. However, it is obviously also possible to perform Node B replacement by using a command from the OMC 50, i.e., an instruction from the operator as a trigger.

Note also that the operation of each unit in each embodiment described above may also be performed by prestoring the operation sequence as a program in the recording medium, and allowing the CPU as a computer to read and execute the program.

## Claims

1. A mobile communication system comprising a mobile terminal unit, a radio base station which communicates with said mobile terminal unit via a radio channel, and a radio controller which controls said radio base station, and is physically separated into first control means for controlling transfer of signaling and second control means for accommodating said radio base station under the control and controlling transfer of user data, **characterized by** further comprising a radio base station replacement control apparatus which controls replacement of said radio base station.

2. A mobile communication system comprising a mobile terminal unit, a radio base station which communicates with said mobile terminal unit via a radio channel, and a radio controller which controls said radio base station, and is physically separated into first control means for performing control independent of a radio transmission scheme and second control means for accommodating said radio base station under the control and performing control depending on a radio transmission scheme, **characterized by** further comprising a radio base station replacement control apparatus which controls replacement of said radio base station.

3. A mobile communication system comprising a mobile terminal unit, a radio base station which communicates with said mobile terminal unit via a radio channel, and a radio controller which controls said radio base station, and is physically separated into first control means for controlling transfer of signaling and second control means for accommodating said radio base station under the control and controlling transfer of user data, said second control means performing control depending on a radio transmission scheme, **characterized by** further comprising a radio base station replacement control apparatus which controls replacement of said radio base station.

4. A mobile communication system comprising a mobile terminal unit, a radio base station which communicates with said mobile terminal unit via a radio channel, and a radio controller which controls said radio base station, and is physically separated into first control means for controlling a terminal resource of said mobile terminal unit and second control means for accommodating said radio base station under the control and controlling a base station resource of said radio base station, **characterized by** further comprising a radio base station replacement control apparatus which controls replacement of said radio base station.

5. A mobile communication system according to any one of claims 1 to 4, **characterized by** further comprising a network which connects said first control means, second control means, and radio base station replacement control apparatus.

6. A mobile communication system according to any one of claims 1 to 5, **characterized in that** said radio base station replacement control apparatus comprises means for notifying, in response to an external trigger, a radio base station as an object of replacement of identification information of second control means which is to newly accommodate said radio base station.

7. A mobile communication system according to claim 6, **characterized in that** said radio base station replacement control apparatus further comprises means for notifying said first control means of identification information of said radio base station as an object of replacement and identification information of said second control means as an accommodation destination.

8. A radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling transfer of signaling and second control means for accommodating said radio base station under the control and controlling transfer of user data, **characterized in that** said first and second control means are physically independent of each other.

9. A radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for performing control independent of a radio transmission scheme and second control means for accommodating said radio base station under the control and performing control depending on a radio transmission scheme, **characterized in that** said first and second control means are physically independent of each other.

10. A radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling transfer of signaling and second control means for accommodating said radio base station under the control and controlling transfer of user data, said second control means performing control depending on a radio transmission scheme, **characterized in that** said first and second control means are physically independent of each other.

11. A radio base station replacement control apparatus which controls replacement of a radio base station in a mobile communication system comprising a mobile terminal unit, said radio base station which communicates with said mobile terminal unit via a radio channel, and a radio controller which controls said radio base station, and is physically separated into first control means for controlling a terminal resource of said mobile terminal unit and second control means for accommodating said radio base station under the control and controlling a base station resource of said radio base station, **characterized in that** said first and second control means are physically independent of each other.

12. A radio base station replacement control apparatus according to any one of claims 8 to 11, **characterized in that** said first and second control means are connected across a network.

13. A radio base station replacement control apparatus according to any one of claims 8 to 12, **characterized by** further comprising means for notifying, in response to an external trigger, a radio base station as an object of replacement of identification information of second control means which is to newly accommodate said radio base station.

14. A radio base station replacement control apparatus according to claim 13, **characterized by** further comprising means for notifying said first control means of identification information of said radio base station as an object of replacement and identification information of said second control means as an accommodation destination.

15. A radio base station replacement control method in a communication system comprising a mobile terminal unit, a radio base station which communicates with the mobile terminal unit via a radio channel, a radio controller which controls the radio base station, and is physically separated into first control means for controlling transfer of signaling and second control means for accommodating the radio base station under the control and controlling transfer of user data, and a radio base station replacement control apparatus which is provided physically independently of the first and second control means and controls replacement of the radio base station, **characterized by** comprising the step of notifying, in response to an external trigger, a radio base station as an object of replacement of identification information of second control means which is to newly accommodate the radio base station.

16. A radio base station replacement control method according to claim 15, **characterized by** further comprising the step of notifying the first control means of identification information of the radio base station as an object of replacement and identification information of the second control means as an accommodation destination.

17. A program for causing a computer to execute a radio base station replacement control method in a communication system comprising a mobile terminal unit, a radio base station which communicates with the mobile terminal unit via a radio channel, a radio controller which controls the radio base station, and is physically separated into first control means for controlling transfer of signaling and second control means for accommodating the radio base station under the control and controlling transfer of user data, and a radio base station replacement control apparatus which is provided physically independently of the first and second control means and controls replacement of the radio base station, **characterized by** comprising the step of notifying, in response to an external trigger, a radio base station as an object of replacement of identification information of second control means which is to newly accommodate the radio base station.

18. A program according to claim 17, **characterized by** further comprising the step of notifying the first control means of identification information of the radio base station as an object of replacement and identification information of the second control means as an accommodation destination.
